Europäisches Patentamt

European Patent Office

Office européen des brevets

(19)

(11) Publication number : **0 520 612 A1**

(12) **EUROPEAN PATENT APPLICATION**

(21) Application number : **92304186.7**

(22) Date of filing : **08.05.92**

(51) Int. Cl.⁵ : **C08G 63/199, C08G 63/189**

(30) Priority : **10.05.91 JP 105679/91**
**30.03.92 JP 73915/92**

(43) Date of publication of application :
**30.12.92 Bulletin 92/53**

(84) Designated Contracting States :
**AT BE CH DE DK ES FR GB GR IT LI LU MC NL PT SE**

(71) Applicant : **POLYPLASTICS CO. LTD.**
**3-13, Azuchicho, 2-chome**
**Chuo-Ku Osaka-shi Osaka 541 (JP)**

(72) Inventor : **Nakane, Toshio**
**885-11, Miyajima**
**Fuji-shi, Shizuoka (JP)**
Inventor : **Konuma, Hiroaki**
**371-7, Okitsu-Inoue-cho**
**Shimizu-shi, Shizuoka (JP)**
Inventor : **Shiwaku, Toshio**
**324, Miyashita**
**Fuji-shi, Shizuoka (JP)**
Inventor : **Hijikata, Kenji**
**8-8, Fujimidai**
**Mishima-shi, Shizuoka (JP)**

(74) Representative : **Tebbit, Antony Hugh Edward**
**HYDE, HEIDE & O'DONNELL 10-12 Priests Bridge**
**London SW15 5JE (GB)**

(54) **Heat-resistant polyester resin and resin composition.**

(57)   A heat-resistant polyester resin which has excellent heat resistance and particularly such a high crystallinity and a high crystallization rate as to be suitable for injection molding is prepared by copolymerizing a diol component comprising 1,4-cyclohexanedimethanol as a main component with an acid component comprising a naphthalenedicarboxylic acid or an ester-forming derivative thereof and 4,4'-diphenyldicarboxylic acid or an ester-forming derivative thereof as main components, and has a composition satisfying the following formula :

$$3/7 \leq A / B \leq 8.5/1.5$$

wherein A is the molar fraction of the napthalenedicarboxylic acid component and B is that of the 4,4'-diphenyldicarboxylic acid component.

EP 0 520 612 A1

The present invention relates to a novel heat-resistant polyester resin which has excellent heat resistance and particularly such a high crystallinity and a high crystallization rate as to be suitable for injection molding.

PRIOR ART

Up to this time, there have been proposed poly-cyclohexylenedimethylene terephthalate prepared from cyclohexanedimethanol as a diol component, polyethylene naphthalate and polybutylene naphthalate which are prepared from a naphthalenedicarboxylic acid as an acid component, and so forth as heat-resistant polyester resins.

Further, a polyester mainly prepared from cyclohexanedimethanol and a naphthalenedicarboxylic acid has already been known as a resin which has a high glass transition temperature and is excellent in heat resistance.

However, these polyester resins are noncrystalline or exhibit such a low crystallization rate as not to attain complete crystallization in injection molding even if they are crystalline. Accordingly, they are disadvantageous in that they gradually crystallize in service under hightemperature conditions to result in lowered physical properties and in that they are poor in dimensional stability, and are particularly unsuitable for injection molding.

SUMMARY OF THE INVENTION

In view of the above problems, the inventors of the present invention have intensively studied to develop a material which has excellent heat resistance and such a high crystallization rate as to be free from the above troubles from the standpoint of introducing a well-compatible and high-crystallinity component into a polymer molecular chain by copolymerization to thereby enhance the crystallization rate of the polymer, and have found that a copolyester prepared from cyclohexanedimethanol as a diol component and an acid component based on a naphthalenedicarboxylic acid and 4,4'-diphenyldicarboxylic acid as a high-crystallinity component at a specific ratio exhibits an enhanced crystallization rate while retaining the high heat resistance. The present invention has been accomplished on the basis of this finding.

The present invention provides a heat-resistant polyester resin which is prepared by copolymerizing a diol component comprising 1,4cyclohexanedimethanol as a main component with an acid component comprising a naphthalenedicarboxylic acid or an ester-forming derivative thereof and 4,4'-diphenyldicarboxylic acid or an ester-forming derivative thereof and has a composition satisfying the following formula:

$$3/7 \leq A / B \leq 8.5/1.5$$

wherein A is the molar fraction of the naphthalenedicarboxylic acid component and B is that of the 4,4'-diphenyldicarboxylic acid component.

Now, the constituents of the copolyester of the present invention will be described.

First, the diol component constituting the copolymer of the present invention is one comprising 1,4-cyclohexanedimethanol as a main component. Although trans- and cis-isomers are known with respect to 1,4-cyclohexanedimethanol, trans-1,4-cyclohexanedimethanol, cis-1,4-cyclohexanedimethanol and mixtures of both are all usable as the starting monomer in the present invention. The use of a trans/cis mixture is particularly preferable in respect of raw material cost.

Next, the naphthalenedicarboxylic acid component which is one of the dicarboxylic acid components constituting the copolyester of the present invention may be either a naphthalenedicarboxylic acid or an ester-forming derivative thereof such as a dialkyl ester thereof. Although the naphthalenedicarboxylic acid component may include 2,6-naphthalenedicarboxylic acid, 2,7-naphthalenedicarboxylic acid and/or derivatives thereof, one comprising 2,6-naphthalenedicarboxylic acid or a derivative thereof as a main component is preferable in respect of heat resistance and crystallization rate. It is generally advantageous in respect of raw material cost to use a mixture of 2,6-naphthalenedicarboxylic acid or a derivative thereof with other isomer such as 2,7-naphthalenedicarboxylic acid or a derivative thereof in such an amount as not to impair the heat resistance and the crystallization rate.

The 4,4'-diphenyldicarboxylic acid component which is the other dicarboxylic acid component constituting the copolyester of the present invention may be either 4,4'-diphenyldicarboxylic acid or an ester-forming derivative thereof such as a dialkyl ester thereof.

We have found that the ratio of the molar fraction of the naphthalenedicarboxylic acid component to that of the 4,4'-diphenyldicarboxylic acid component, i.e., the A/B ratio is to be kept in the range 3/7 to 8.5/1.5 inclusive because if that A/B ratio is lower than 3/7 or higher than 8.5/1.5, the melting point of the obtained polyester will approach 300°C, so that the melt polymerization temperature will have to be set at 300°C or above, and this will be unfavorably causative of thermal decomposition in polymerization because the melt polymerization temperature is too near to the decomposition temperature of the polyester.

In respect of the thermal stability and crystallinity of the polyester resin, it is particularly preferable that the composition satisfy the following formula:

$$4/16 \leq A / B \leq 7/3.$$

Further, it is more advantageous in respect of raw material cost that the molar fraction (B) of the 4,4'-diphenyldicarboxylic acid component be lower.

The copolyester of the present invention may further contain a known diol, dicarboxylic acid or trifunctional component incorporated into the molecular chain by copolymerization, so far as the heat resistance or crystallization rate thereof is not significantly impaired.

The copolyester of the present invention can be prepared by any conventional process for the preparation of polyester. Specifically, the copolyester can be prepared by heating the monomers described above in the presence of a catalyst to conduct esterification or transesterification and polycondensing the reaction product while distilling away excess monomers and a liberated component under a reduced pressure. The catalyst to be used therein may be a known polycondensation catalyst useful for the preparation of polyester and examples thereof include tetraalkoxytitaniums such as tetrabutoxytitanium; metal salts of titanium oxalate such as titanium potassium oxalate; tin compounds such as dibutyltin oxide and dibutyltin laurate; metal salts of acetic acid such as zinc acetate, lead acetate, manganese acetate and calcium acetate; and antimony compounds such as antimony trioxide, which may be used either alone or as a mixture of two or more of them.

In order to increase the molecular weight of the polymer (including oligomer) prepared by melt or solution polymerization, the polymer may be treated at such a highest possible temperature as not to cause the fusion of polymer particles with each other in a vacuum or inert gas atmosphere for a necessary time. In other words, the polymer may be subjected to so-called solid-phase polymerization. It is preferable that the polymer have an intrinsic viscosity (which is an indication of the molecular weight) of 0.3 or above, still preferably 0.5 or above.

The copolyester prepared by the above-mentioned process may be blended with one or more members selected from among other thermoplastic resins, inorganic resins and organic additives, depending upon the object, to form a polyester resin composition which also falls within the scope of the present invention.

Other thermoplastic resin which may be used include polyolefins such as polyethylene, polypropylene, polybutadiene and polyisoprene; polyvinyl compounds such as polystyrene and polyvinyl chloride; aromatic polyesters such as polyethylene terephthalate and polybutylene terephthalate; wholly aromatic polyester, polyamide, wholly aromatic polyamide, polycarbonate, polyphenylene sulfide, polyphenylene oxide, polyacetal and fluororesin, though the thermoplastic resin is not particularly limited. These thermoplastic resins may be also used as a mixture of two or more of them.

The inorganic filler may be selected from among various fibrous, powdery and flaky ones depending upon the object.

Such fibrous fillers include fibers of glass, carbon, asbestos, silica, silica/alumina, alumina, zirconia, silicon nitride, boron nitride, boron and potassium titanate; and fibers of metals such as stainless steel, aluminium, titanium, copper and brass. Powdery fillers include carbon black, graphite, silica, quartz powder, glass bead, milled glass fiber, glass balloon, glass powder, silicates such as calcium silicate, aluminum silicate, kaolin, talc, clay, diatomaceous earth and wollastonite; metal oxides such as iron oxide, titanium oxide, zinc oxide, antimony trioxide and alumina; metal carbonates such as calcium carbonate and magnesium carbonate; metal sulfates such as calcium sulfate and barium sulfate; ferrite, silicon carbide, silicon nitride and various powdered metals. Flaky fillers include mica, glass flake and various metal foils. These inorganic fillers may be also used as a mixture of two or more of them.

Organic additives which maybe used include heat stabilizers, antioxidants, ultraviolet absorbers, antistatic agents, flame retardants, auxiliary flame retardants, colorants such as dye and pigment, slip additives for improving fluidity and mold release properties, lubricants, crystallization accelerators and so forth.

EXAMPLES

The present invention will now be described specifically by referring to the following Examples, though the present invention is not limited by them.

EXAMPLE 1

A polymer having an intrinsic viscosity [$\eta$] of 0.50 was prepared from 64.6 parts by weight of a mixture comprising trans-1,4-cyclohexanedimethanol and cis-1,4-cyclohexanedimethanol (trans/cis ratio: 7/3, hereinafter abbreviated to "CHDM-I"), 43.8 parts by weight of dimethyl 2,6-naphthalenedicarboxylate (hereinafter abbreviated to "NDA-1") and 32.3 parts by weight of dimethyl 4,4'-diphenyldicarboxylate (hereinafter abbreviated to "BB") as starting monomers through transesterification and polycondensation with 0.055 part by weight (550 ppm) of titanium tetrabutoxide (hereinafter abbreviated to "TBT") as a catalyst. The dicarboxylic acid ratio A/B

3

of the polymer was 6/4 as determined by $^1$H-NMR spectroscopy using trifluoroacetic acid as a solvent. Further, the melting peak temperature of the polymer was 276°C as determined by DSC at a temperature rise rate of 10°C/min. Furthermore, the difference between the crystallization peak temperature (Tc) as determined by DSC by heat treating the polymer at a temperature drop and rise rate of 10°C/min from a molten state and the melting peak temperature (Tm) was 60°C, which is an indication of the crystallization rate. The results are given together in Table 1.

EXAMPLE 2

The same procedure as that of Example 1 was repeated except that 64.1-parts by weight of CHDM-1, 36.2 parts by weight of NDA-1 and 40.1 parts by weight of BB were used as the starting monomers to obtain a polyester having an A/B ratio of 5/5. This polymer was evaluated similarly and the results are given together in Table 1.

EXAMPLE 3

The same procedure as that of Example 1 was repeated except that 63.6 parts by weight of CHDM-1, 28.7 parts by weight of NDA-1 and 47.7 parts by weight of BB were used as the starting monomers to obtain a polyester having an A/B ratio of 4/6. This polymer was evaluated similarly and the results are given together in Table I.

EXAMPLE 4

The same procedure as that of Example 1 was repeated except that a 1,4-cyclohexanedimethanol isomer mixture (hereinafter abbreviated to "CHDM-2") having a trans/cis ratio of 9/1 was used instead of the CHDM-1 to obtain a polyester having an A/B ratio of 6/4. This polymer was evaluated similarly and the results are given together in Table 1.

EXAMPLE 5

The same procedure as that of Example 1 was repeated except that a mixture comprising dimethyl 2,6-naphthalenedicarboxylate and dimethyl 2,7-naphthalenedicarboxylate (ratio of 2,6-isomer to 2,7-isomer: 9 : 1, hereinafter abbreviated to "NDA-2") was used instead of the NDA-1 to obtain a polyester having an A/B ratio of 6/4. This polymer was evaluated similarly and the results are given together in Table 1.

EXAMPLE 6

The same procedure as that of Example 1 was repeated except that 65.1 parts by weight of CHDM-1, 51.5 parts by weight of NDA-1 and 24.4 parts by weight of BB were used as the starting monomers to obtain a polyester having an A/B ratio of 7/3. This polymer was evaluated similarly and the results are given together in Table 1.

EXAMPLE 7

The same procedure as that of Example 1 was repeated except that 65.4 parts by weight of CHDM-I, 55.4 parts by weight of NDA-1 and 20.4 parts by weight of BB were used as the starting monomers to obtain a polyester having an A/B ratio of 7.5/2.5. This polymer was evaluated similarly and the results are given together in the Table 1.

EXAMPLE 8

The same procedure as that of Example 1 was repeated except that 65.6 parts by weight of CHDM-1, 59.3 parts by weight of NDA-1 and 16.4 parts by weight of BB were used as the starting monomers and that the polycondensation temperature was strictly regulated to 310°C to obtain a polyester having an A/B ratio of 8/2. This polymer was evaluated similarly and the results are given together in Table 1.

COMPARATIVE EXAMPLE 1

The preparation of a polyester having an A/B ratio of 2/8 was attempted in the same manner as that of the Example 1 except that 62.7 parts by weight of CHDM-I, 14.2 parts by weight of NDA-1 and 62.6 parts by weight of BB were used as the starting monomers. Since, however, the reaction system solidified in the course of the polycondensation subsequent to the transesterification, the reaction temperature was further enhanced. This caused the contents to be discolored, the stirring torque to be rapidly dropped, and the formed polymer to be decomposed.

COMPARATIVE EXAMPLE 2

The same procedure as that of the Example 1 was repeated except that 72.3 parts by weight of CHDM-1, 40.8 parts by weight of NDA-1 and 32.4 parts by weight of dimethyl terephthalate were used as the starting monomers to obtain a polyester containing NDA-1 at a molar fraction of 0.5 based on the whole dicarboxylic acid component and having an intrinsic viscosity $[\eta]$ of 0.50. The melting peak temperature of the polymer was 272°C, but no crystallization peak was observed when the polymer was heat treated from a molten state at a temperature drop and rise rate of 10°C/min.

COMPARATIVE EXAMPLE 3

The same procedure as that of the Example 1 was repeated except that 25.5 parts by weight of CHDM-1, 21.9 parts by weight of ethylene glycol and 86.2 parts by weight of NDA-1 were used as the starting monomers to obtain a polyester containing CHDM-1 at a molar fraction of 0.5 based on the whole diol component and having an intrinsic viscosity $[\eta]$ of 0.50. The melting peak temperature of the polymer was 274°C, but no crystallization peak was observed when the polymer was heat treated from a molten state at a temperature drop and rise rate of 10°C/min.

As will be understood from the above description and Examples, the copolyester of the present invention is excellent in heat resistance and exhibits an enhanced crystallization rate, so that it can be molded in a shortened cycle at an enhanced productivity. By virtue of these characteristics, the copolyester and its composition are processed by, e.g., injection or extrusion, into film, sheet, fiber and so forth, which are used in various fields. Particularly, they are suitable for the application to the fields where heat resistance is necessitated, including electronic and electric appliances, automobile, airplane and so on. More particularly, they exhibit the most remarkable effect when molded by injection.

(TABLE 1)

| Component (Parts by weight) | EXAMPLE | | | | | | | |
|---|---|---|---|---|---|---|---|---|
| | 1 | 2 | 3 | 4 | 5 | 6 | 7 | 8 |
| CHDM-I | 64.6 | 64.1 | 63.6 | - | 64.6 | 65.1 | 65.4 | 65.6 |
| CHDM-2 | - | - | - | 64.6 | - | - | - | - |
| NDA-1 | 43.8 | 36.2 | 28.7 | 43.8 | - | 51.5 | 55.4 | 59.3 |
| NDA-2 | - | - | - | - | 43.8 | - | - | - |
| BB | 32.3 | 40.1 | 47.7 | 32.3 | 32.3 | 24.4 | 20.4 | 16.4 |
| TBT | 0.055 | 0.055 | 0.055 | 0.055 | 0.055 | 0.055 | 0.055 | 0.055 |
| A/B ratio | 6/4 | 5/5 | 4/6 | 6/4 | 6/4 | 7/3 | 7.5/2.5 | 8/2 |
| [η] | 0.50 | 0.70 | 0.65 | 0.55 | 0.55 | 0.55 | 0.55 | 0.50 |
| melting peak temp (°C) | 276 | 272 | 279 | 282 | 272 | 288 | 295 | 305 |
| (Tm - Tc) (°C) | 60 | 50 | 54 | 57 | 60 | 61 | 66 | 68 |

**Claims**

1. A heat-resistant polyester resin which is prepared by copolymerizing a diol component comprising 1,4-cyclohexanedimethanol as a main component with an acid component comprising a naphthalenedicarboxylic acid or an ester-forming derivative thereof and 4,4'-diphenyldicarboxylic acid or an ester-forming derivative thereof as main components, and has a composition satisfying the following formula:

$$3/7 \le A / B \le 8.5/1.5$$

wherein A is the molar fraction of the naphthalenedicarboxylic acid component and B is that of the 4,4'-diphenyldicarboxylic acid component.

2. A heat-resistant polyester resin according to claim 1, wherein said naphthalenedicarboxylic acid is one comprising 2,6-naphthalenedicarboxylic acid or an ester-forming derivative thereof as a main component.

3. A heat-resistant polyester resin according to claim 1 or 2, wherein said 1,4-cyclohexanedimethanol is in the form of a trans/cis mixture.

4. A heat-resistant polyester resin according to any preceding claim, wherein the ratio of the molar fraction of the naphthalenedicarboxylic acid component and that of the 4,4'-diphenyldicarboxylic acid component lies in the range 4/6 to 7/3 inclusive.

5. A heat-resistant polyester resin according to any preceding claim, wherein the polymer formed has an intrinsic viscosity of at least 0.3 and preferably of at least 0.5.

6. A polyester resin composition prepared by blending the heat-resistant polyester resin as set forth in any of claims I to 5 with one or more members selected from among other thermoplastic resins, inorganic fillers and organic additives.

**European Patent Office**

**EUROPEAN SEARCH REPORT**

Application Number

EP 92 30 4186

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 959 450 (J.C. MORRIS et al.) * claims 1-6; column 3, paragraph 2 * --- | 1-3,5 | C 08 G 63/199 C 08 G 63/189 |
| X | US-A-4 956 448 (J.C. MORRIS et al.) * claims 1-6; column 3, paragraph 3 * --- | 1-3,5 | |
| A | CHEMICAL ABSTRACTS vol. 85, no. 24, 13 December 1976, abstract no. 178764v, Columbus, Ohio, US; & JP - A - 51096890 (TEIJIN LTD) 25.08.1976 ----- | | |

TECHNICAL FIELDS SEARCHED (Int. Cl.5)

C 08 G

The present search report has been drawn up for all claims

| Place of search | Date of completion of the search | Examiner |
|---|---|---|
| BERLIN | 20-08-1992 | VOIGTLAENDER R O J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P0401)

8